(19) Europäisches Patentamt
European Patent Office
Office européen des brevets

(11) Publication number: **0 046 056**
A2

(12) **EUROPEAN PATENT APPLICATION**

(21) Application number: 81303582.1

(22) Date of filing: 05.08.81

(51) Int. Cl.[3]: **B 01 J 23/90**
B 01 J 37/02, C 10 G 1/08

(30) Priority: 07.08.80 US 176025

(43) Date of publication of application: 17.02.82 Bulletin 82/7

(84) Designated Contracting States: DE FR GB IT NL

(71) Applicant: Sliepcevich, Cedomir M.
RFD 1 Box 41-B1
Washington Oklahoma(US)

(72) Inventor: Sliepcevich, Cedomir M.
RFD1, Box 41-B1
Washington Oklahoma 73093(US)

(72) Inventor: Sista, Krishna Murthy
131 W Constitution, Apt F
Norman Oklahoma 73069(US)

(74) Representative: Ellis-Jones, Patrick George Armine
J.A. KEMP & CO. 14 South Square Gray's Inn
London WC1R 5EU(GB)

(54) **Process for preparation or reactivation of metal catalysts.**

(57) A process for catalytically converting carbonaceous materials is described using a metal hydrogenation catalyst whose activity is reduced during the catalytic conversion. The reduced activity catalyst is dissolved in a leach solution to form a catalytic metal salt solution. Hydrogen is contacted with the solution so that active catalyst metal is precipitated from the leach solution. The dissolution and reduction steps are continuously effected such that the reduced activity catalyst is continuously converted to an active precipitated metal catalyst. A continuous process for the production of a catalyst mixture of at least two metal catalysts is also described using the same procedure.

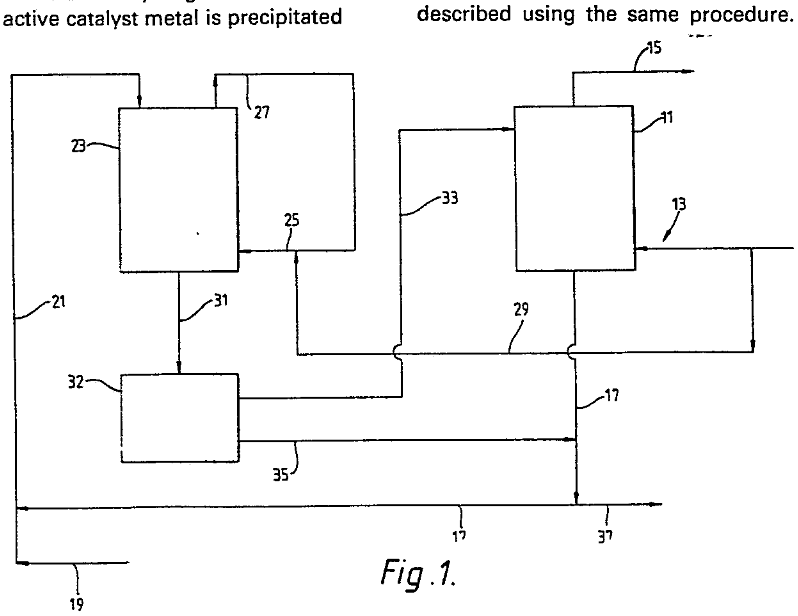


Fig.1.

EP 0 046 056 A2

Croydon Printing Company Ltd.

DESCRIPTION

"PROCESS FOR PREPARATION OR REACTIVATION OF METAL CATALYSTS"

This invention relates to a process of reactivation or preparation of metal hydrogenation catalysts used in the catalytic conversion of carbonaceous materials.

Processes for the preparation of pure metals by contacting solutions of their salts with reducing gases such as hydrogen, carbon monoxide and sulphur dioxide at pressures up to 50 atmospheres and temperatures up to 400°C have been known for over 50 years. The principal advantage of this hydrometallurgical process is the fast and complete reactions obtainable even with dilute solutions. Further, because of the amenability of this process to control, gaseous reduction can be made highly selective for the metal precipitated from a multi-component solution, as well as the quality and size of the final product.

Even though gaseous reduction of metals from solution is attractive, it has been practised only to a limited extent commercially. One reason for this is that the market for finely divided metal powders is relatively small because the major outlet for metal from ores has been the fabrication industry, which prefers feed stocks to be in the form of billets, castings or ingots.

Recently, there has been increasing emphasis on converting coal, biomass and heavy oils to desirable gaseous and liquid fuels, thus creating an increasing demand for metal catalysts used in hydrocarbon hydrogenation. Furthermore, the quality of the coal or liquid oils being converted is, in general, decreasing,

causing the catalysts utilized to be deactivated more quickly. A shortage of fresh catalysts from natural resources can be expected soon.

In catalytic converters for automotive exhausts, platinum, palladium, ruthenium or rhodium are required. The demand for these catalysts is also rapidly increasing as concern for environmental pollution mounts.

In petroleum refining deactivation of hydrogenation catalysts is generally caused at least in part by the deposition of carbon and sulphur on the catalyst surface. Catalysts thus contaminated can be partially regenerated simply by "burning-off" or oxidizing the carbon and sulphur with air, oxygen or steam at high temperatures. Nevertheless, this reactivation is incomplete, and although catalyst activity is partially restored, the catalyst continues to deteriorate so that eventually it must be replaced. Moreover, in oxidizing the spent catalyst surface temperatures may reach 800°C where permanent structural degradation occurs, thus reducing the activity of the catalyst. Therefore, even though the catalyst is made more reactive by deposit removal, it is made less reactive by surface degradation.

In coal conversion, catalyst deactivation is much more serious since trace metals present in coal also deposit on the catalyst surface and in the catalyst pores. A similar problem is encountered in hydrotreating heavy residuum.

Catalysts poisoned by such metal depositions cannot be restored by straightforward oxidative regeneration techniques. Therefore, they are often disposed of and replaced with catalyst obtained, in part, by reclaiming the metal from scrap, including spent catalyst, and in part from raw ore so long as it is available. Clearly, it is much preferred to recover the metal values in spent

catalysts in a reactivated form.

The most pressing demand for catalyst reutilization development is in the conversion of coal, biomass and heavy oils to more desirable gaseous and liquid fuels, where catalysts with increased activity, longer life and improved selectivity for desired products are needed, especially catalyst life.

The present invention provides a catalytic process which comprises catalytically converting carbonaceous material with a metal hydrogenation catalyst such that the metal catalyst is reduced in activity during the catalytic conversion. The reduced activity metal catalyst, or a portion thereof, generally obtained from the conversion zone is dissolved in a leach solution to form a catalytic metal salt solution. Hydrogen gas is contacted with the catalytic metal salt solution so that the active metal is precipitated from the leach solution and at least a portion of the reactivated catalyst is introduced into the conversion zone. The dissolution and reduction steps are continuously effected such that the reduced activity catalyst is continuously converted to an active precipitated metal catalyst.

This process allows continuous reactivation of a metal hydrogenation catalyst which is being used for catalytic conversion of carbonaceous material. A portion of the reduced activity catalyst can be removed from the conversion zone and reacted with a leach solution to form a catalytic metal salt solution. A gaseous reducing agent is introduced into the resulting solution to precipitate active metal catalyst material from the metal salt solution. This precipitated metal catalyst is introduced into the conversion zone. By continually repeating these steps, the catalyst of reduced activity in the conversion zone is continuously replaced by the active precipitated metal catalyst.

Although the catalyst is preferably reactivated at the site of the conversion of carbonaceous material, such is not essential.

Metal catalysts which can be used are copper, nickel, cobalt, silver, gold, platinum, palladium, rhodium, molybdenum, tungsten, ruthenium, and vanadium or combinations thereof. With some of these metals, derivatives such as the oxide or a salt may be catalytically active; these forms can also be used. The operating temperatures and pressures at which these metals catalyze the conversion of various carbonaceous materials, typically comprising a cellulosic material, e.g. sawdust, or a hydrocarbon depend, among other things, on the catalyst, the carbonaceous materials and the particular catalytically induced reaction. In general, the operating pressures will not exceed 200 atmospheres, and the operating temperatures will be below about 550°C.

In the conversion of carbonaceous materials, the catalyst is continually reduced in activity by surface degradation and contamination. In the present invention the continuous gaseous reduction of metals from solution produces directly an active catalyst -- either unsupported or supported. When supported, upon leaching a leached substrate is formed with the metal salt solution such that upon hydrogen introduction to the mixture the metal is deposited on the substrate. If desired a portion of the metal salt solution can be removed prior to mixing. In certain embodiments, it is possible to continuously reactivate the catalyst in situ without having to filter or to remove the catalyst from the catalysis zones or to remove contaminants from the feedstock. In fact, the presence of a sulphur contaminant in the feedstock can sometimes be used to advantage. However when the converted material contains a contaminant which combines with the metal catalyst, a portion of the metal salt

solution is preferably removed after precipitation by hydrogen.

In reactivating the catalyst, an aqueous solution of metal "solvent" such as ammonia or acid (leach solution) is added to the catalyst such that a metal salt solution is formed. A stream of this metal salt solution can be passed through a tubular reactor while hydrogen is bubbled through. The solution is preferably charged through the reactor under steady-state conditions in modified plug flow in which localized limited backmixing occurs. The solution can be heated either before charging to, or while in (i.e. it is charged at ambient temperature), the reactor to a temperature of at least 100°C. Within the reactor, a reduction reaction occurs such that particulate metal is continuously precipitated. This metal powder can then be separated from the liquid effluent. By controlling the operating conditions of the reactor, the process can be made continuous.

This method has several advantages. First, the catalyst is continuously reactivated so that reactivation can be coupled with the catalysis process. It is thus not necessary to desulphurize or otherwise remove contaminants from the feedstock. Mechanical losses in reprocessing are thus minimised and handling of toxic and pyrophoric catalysts avoided. Second, in the combined process the catalyst is immediately utilized in its highly active state. Since the precipitated particulate metal has a large surface area which has not been oxidized, the catalyst is more active than catalysts which are formed or regenerated in separate processes and substituted for the spent catalyst. Third, the temperatures and pressures in processes which utilize metal catalysts in the hydrogenation conversion of carbonaceous materials are compatible with the temperatures

and pressures utilized in the regeneration. Thus the processes can be combined without substantial addition of capital equipment or energy. Furthermore, metal catalysis processes often utilize the same solvents and hydrogen required for the regeneration with consequent savings.

In a preferred embodiment the precipitaton zone and the catalysis zone are contiguous zones within a single tubular reactor, preferably with the catalysis zone at a higher temperature than the precipitation zone.

The following Examples further illustrate the present invention.

EXAMPLE I

Figure 1 gives a flow diagram for a process for copper-catalyzed methanol synthesis carried out in combination with continuous catalyst reactivation. Methanol synthesis reactor 11 is of conventional type. Synthesis gas (such as carbon monoxide and hydrogen) is passed into the reactor via stream 13 and methanol product passes out of the reactor in stream 15. Conventionally, when the catalyst has been deactivated, it is removed from the reactor and replaced with fresh catalyst. Instead, a portion of the copper catalyst which is in a partially reduced state is continually removed via stream 17 and combined with a leach solution stream 19 of ammonia or acid. Streams 17 and 19 combine to form a stream 21 which enters a metal precipitation reactor 23 where the copper is continuously precipitated by means of hydrogen gas introduced by stream 25. Hydrogen passes through the reactor 23 and exits via stream 27 which recycles unreacted gas into stream 25.

Since the synthesis gas can function as a reducing gas, some of it in stream 13 can be passed from

stream 13 to stream 25 by means of stream 29. Fresh, highly active copper catalyst and spent leach solution are discharged from reactor 23 via stream 31 which enters a product separator 32. The copper catalyst is then passed in stream 33 back to the synthesis reactor 11. The spent leach solution is passed from separator 32 into stream 17 via stream 35 where it can again dissolve the reduced activity catalyst leaving the synthesis reactor 11 in stream 17.

If substantial amounts of contaminating materials, such as sulphur, are building up in the leach solution, it may be necessary to replace some of it with fresh leach solution. Stream 37 allows for this removal stream 17. This contaminated leach solution can then be up-graded. Fresh leach solution can be added to the system via stream 19.

Another variation of the methanol synthesis is to make use of the cuprous ion, formed during the reduction of the cupric ion to copper, to carry out a liquid phase synthesis of methanol.

EXAMPLE 2

A different methanol synthesis is illustrated schematically in FIG. 2 where the metal precipitation reactor is combined with the synthesis reactor. Combined reactor 39 converts synthesis gas to methane by a nickel catalyzed reaction. The combined reactor 39 is preferably an externally and variably heated tubular reactor. Nickel-containing leach solution is introduced by stream 41 into the bottom of the reactor. Hydrogen is introduced into the bottom of the reactor by stream 43. Nickel particles are precipitated from the nickel leach solution in the lower portion of the reactor as the hydrogen reduces the nickel ions in the solution.

As the solution, precipitate and hydrogen flow upwardly and the temperature continues to rise, carbon monoxide and additional hydrogen are introduced into the central section of the reactor by means of synthesis gas stream 45. The presence of carbon monoxide with hydrogen suppresses additional precipitation of nickel from the leach solution. At the higher temperature in this central section, however, the carbon monoxide and hydrogen react to form methane. The exothermic heat of reaction increases the temperature further, thereby increasing the rate of methane formation. Partial deactivation of the nickel catalyst due to sulphur contamination from the synthesis gas takes place in the upper portion of the reactor. As the gases, liquids, and solids continue to move upwardly, some of the sulphur-contaminated catalyst will redissolve into the liquid before exiting at stream 47, since the reducing gases have been largely depleted in the production of methane.

Stream 47 enters separator 49 where the reactor effluent in stream 47 is separated into a gaseous methane stream 51 and a liquid and solid containing slurry stream 53 which contains the deactivated nickel

and leach solution.

Stream 53 is at a higher temperature than the bottom of the reactor 39 and therefore it is desirable to exchange the heat in stream 53 with the incoming synthesis gas in stream 45 and the incoming hydrogen in stream 43. After being cooled partially thereby, stream 53 is recycled into stream 41. The deactivated nickel in the leach solution is thus again precipitated as free nickel particles in the bottom of the reactor by the reducing hydrogen passed into the reactor by stream 43. The nickel catalyst is then again ready for catalysis in the upper part of the methane synthesis reactor 39.

As in Example 1, it is desirable to avoid a buildup of sulphur and other contaminants in the recycle leach solution. This can be accomplished by removing a small slip stream for purification and adding a corresponding amount of fresh leach solution. Make-up leach solution enters stream 41 via stream 55 and spent leach solution is withdrawn from stream 53 by means of stream 57.

Because of the high activity of the freshly formed nickel catalyst, it is feasible to operate the methane synthesis at or below 300°C where equilibrium conversion is essentially 100 percent. Thus, the catalyst reactivation enables a more efficient methane synthesis.

EXAMPLE 3

Liquefaction as gasification can be combined as shown schematically in FIG. 3. In a reactor 59, biomass, such as sawdust or other cellulosic material, is converted by a nickel catalyst to fuel gas and fuel oil. The sawdust in stream 61 is slurried with a nickel leach solution stream 63 and is introduced into the bottom of reactor 59. The nickel values in the leach solution are, of course, derived from the dissolution of spent nickel catalyst from the reactor. Hydrogen in stream 65 is also introduced into the bottom of reactor 59. In

the lower section of reactor 59 (which is preferably externally and variably heated such that temperature increases from the lower end of the reactor to the upper end) where the temperature is maintained at 100°C to 250°C, nickel metal will precipitate.

As the mixture of solids, liquids and gases moves upwardly and the temperature rises above about 300°C, the freshly precipitated nickel catalyst will first convert a portion of the sawdust, water and hydrogen to natural gas. As the mixture continues to flow upwardly, the production of natural gas decreases as the catalyst undergoes some deactivation with the result that the remaining wood is converted into a fuel oil.

The entire flow exits the top of the reactor stream 67 which enters separator 69 which separates stream 67 into a stream 71 containing fuel gas and a stream 73 containing fuel oil and spent leach solution. Stream 73 enters a coalescer and separator 75 which divides stream 73 into a fuel oil stream 77 and a stream 79 containing spent leach solution in which deactivated nickel catalyst is dissolved. Stream 79 then enters feed preparation tank 81. Stream 63 exits tank 81 and feeds the lower part of the reactor 59 with the leach solution containing the nickel values to be regenerated by hydrometallurgical reduction in the lower portion of the reactor.

EXAMPLE 4

The continuous gaseous reduction process can also be adapted to preparing fresh, or reclaiming spent, substrate-supported catalysts. A schematic of the sequence of operations is shown in Figure 4. In supported catalysts, the metal catalyst is carried on a substrate or support, such as alumina, kieselguhr, fiber glass or charcoal.

Referring to Figure 4, a synthesis plant 83 utilizes a metal catalyst in a synthesis reaction which requires a reducing gas such as carbon monoxide and hydrogen. The metal catalyst is supported on a substrate. The deactivated (or at least reduced activity) supported metal catalyst is removed from the synthesis plant via stream 85 and introduced into leaching vessel 87. An acidic or ammoniacal leach solution is also introduced into vessel 87 via stream 89 to leach the metal catalyst from its support. The solid support material exits vessel 87 in stream 91 and the pregnant metal leach solution exits in stream 93.

Streams 91 and 93 are combined in slurry vessel 95 such that the solid support is uniformly distributed in the leach solution when it leaves slurry vessel 95 via stream 97 and enters metal precipitation reactor 99. Hydrogen gas is introduced into metal precipitation reactor 99 by stream 101. This gas is obtained from the synthesis plant via stream 103 and from recycled untreated reducing gas which exits the top of the metal precipitation reactor (stream 105). In addition to the reducing gas passing to the reactor via stream 103, a portion of the gas produced in the synthesis plant 83 is removed as product gas via stream 106.

When the slurry contacts the reducing gas in reactor 99 the metal catalyst is continuously precipitated and deposits uniformly on the support material.

The spent leach solution and freshly precipitated supported catalyst exit reactor 99 in stream 107 and enter separator 99 in stream 107 and enter separator 109 which divides the stream 107 into a stream 111 of fresh supported catalyst and a stream 113 of leach solution. Stream 111 introduces fresh catalyst to the synthesis plant 83. Stream 113 is combined with makeup leach solution of stream 115 to form stream 89 which feeds the leaching vessel 87. Contaminants are removed from the process by removing a portion of stream 113 as a stream 117.

It will be appreciated that the freshly formed metal surface is highly active and is immediately deposited in this state on the support, thus enhancing the activity of the supported catalyst. Also, the scavenging action of the solid support particles slurried in the leach solution minimizes the tendency of the tiny metal particles to adhere to the reactor walls and to bridge the reactor, which bridging could eventually lead to plugging.

By way of example, synthesis plant 83 may be a Fischer-Tropsch process utilizing a cobalt-alumina catalyst at about 300°C and about 100 atmospheres to produce a fuel oil from synthesis gas.

EXAMPLE 5

A variation of the process described in Example 4 is coal gasification catalyzed by ammoniacal nickel, using pulverized coal as support. Such a process is schematically shown in Figure 5. (The addition of additional catalyst support material is optional.). Pulverized coal and an ammoniacal nickel sulphate solution are slurried and preheated to about 200°C prior to entering the bottom of the combined metal precipitation and synthesis reactor 119 through stream 121. Hydrogen is introduced to the bottom of the reactor 119 by stream 123. The reactor defines three vertically tiered zones

or stages according to the chemical reactions taking place therein.

In the first zone (lower portion of the reactor), nickel is precipitated by gaseous reduction according to the chemical reaction:

$$Ni^{++} + H_2 \rightarrow Ni + 2H^+$$

The fine coal particles act as seed crystals.

In the second zone (central section) the freshly formed nickel catalyst catalyzes the hydrogenation of coal to gaseous hydrocarbons, according to the following reaction:

$$nC + (n + 1)H_2 \longrightarrow C_nH_{(2n + 2)}$$

Some higher hydrocarbons (liquids) will also be produced in this zone. Simultaneously, sulphur present in the coal will react with the hydrogen to form hydrogen sulphide, as follows:

$$S + H_2 \rightarrow H_2S$$

The hydrogen sulphide in turn can deactivate or poison the nickel catalyst by forming a nickelous sulphide according to the reaction:

$$2H_2S + 3Ni \rightarrow Ni_3S_2 + 2H_2$$

In the presence of excess hydrogen, however, this last reaction will be suppressed.

In the third zone (upper section) gas production decreases as a result of progressive deactivation of the catalyst, thereby causing the formation of heavier (liquid) hydrocarbons to predominate.

The overhead of the reactor is separated into a gas stream 125 and a liquids and solids stream 126. The gas stream 125 enters a separator 127 which separates a desirable fuel product gas stream 129 from a stream 131 which is reintroduced to stream 126, and which contains the remaining non-fuel gases. Stream 126 enters clarifier 133. The clarifier removes ammonium sulphate, and this ammonium sulphate is removed via stream 135. The remainder of stream 126 is then discharged from the clarifier in stream 137.

Stream 137 enters aerator or oxidizer 139 to which an air or oxygen stream 141 and a sulphuric acid stream 143 are charged. Stream 137 is essentially comprised of a slurry of leach solution, partially deactivated catalyst, coke and ash. This mixture is acidified by the sulphuric acid and aerated at about 120°C to oxidize the nickelous sulphide according to the reaction:

$$Ni_2S_2 + \frac{1}{2}O_2 + 2H^+ \longrightarrow 2NiS + Ni^{++} + H_2O$$

Above 120°C, nickelous sulphide oxidizes as follows:

$$NiS + 2O_2 \longrightarrow NiSO_4$$

The nickelous sulphide and nickel sulphate are then complexed with ammonia in digester 145 where the following reactions occur:

$$NiS + 2NH_3 + 2O_2 \rightarrow Ni(NH_3)_2^{++} + SO_4^{--}$$

$$NiSO_4 + 2NH_3 \rightarrow Ni(NH_3)_2^{++} + SO_4^{--}$$

The ammonia is added to the digester in stream 147.

After ammoniacal dissolution of the nickel, the ash and coke are removed by filtration in a filter 149. The pH of the nickel-containing filtrate stream 151 which is discharged from filter 149 is adjusted by dilution. Ammonium sulphate, recovered by the clarifier 133 and forming stream 135, is added at this point to facilitate subsequent precipitation of the nickel in the reactor. The filtrate stream 151 is then mixed with the pulverized coal in a mixer 153. The resulting slurry from mixer 153 forms stream 121 which enters the bottom of the reactor for another cycle.

EXAMPLE 6

Another version of coal (or biomass) gasification in which a cobalt/molybdenum catalyst is used is shown schematically in Figure 6. The addition of a catalyst support material is optional for this process.

Pulverized coal is slurried with an ammoniacal solution of cobalt and molybdenum in mixer 155. This slurry is heated to about 135°C to about 200°C, and is then fed by stream 157 into the bottom of reactor 159. Hydrogen is introduced into the bottom of reactor 159 through a stream 161, pressurized to approximately 20 atmospheres.

As in Example 5 the reactions in reactor 159 are separated into three reacting zones. In the first (lower section) zone, cobalt and a complex oxide of molybdenum co-precipitate. (Some cobalt oxide may also be present.) In the second (central section) zone, the active cobalt/molybdenum catalyst converts the coal primarily to paraffinic hydrocarbon gases (methane, ethane, etc.) and to a lesser extent to higher hydrocarbon liquids. Sulphur present in the coal progressively converts the molybdenum oxide to molybdenum disulphide which preferentially catalyzes the conversion of coal to liquids. The combination of the deactivation of the cobalt

selectivity favoring gasification, along with the progressive replacement of molybdenum oxide by molybdenum disulphide, results in predominant liquefaction of the coal in the third (upper section) zone.

As in Example 5, the overhead products are separated into a fuel gas product stream 163 and a recycle slurry 165. The residual liquid fuel product and ammonium sulphate solution (formed in the first zone of the reactor) are overflowed from the suspended solids (cobalt, molybdenum disulphide, coke and ash) in clarifier 167. Underflow stream 169 from the clarifier 167 enters oxidizer 171 where it is treated with dilute sulphuric acid (about 10%) and air (or oxygen). Air enters oxidizer 171 through stream 173 and dilute sulphuric acid enters the oxidizer 171 via stream 175. The sulphuric acid and air are combined with the cobalt, molybdenum, coke and ash in the oxidizer at around 120°C to dissolve the cobalt sulphide. The molybdenum disulphide remains suspended with the coke and ash particles.

Stream 177 is discharged from oxidizer 117 into a digester 179. Ammonia is added to the digester via stream 181 to convert the cobalt sulphide to a cobalt ammonium complex. In this form, the cobalt can be readily precipitated downstream by hydrogen reduction in the first zone.

An alternate scheme for dissolving the cobalt sulphide is to leach directly with ammonia in the presence of air or oxygen in an autoclave at about 175° to about 200°C and about 40 atmospheres pressure. The oxidation reaction proceeds via intermediate compounds of polysulphides, thiosulphates and thionates. Since these intermediates contaminate the cobalt with sulphur when it is precipitated by hydrogen reduction in the first zone of the reactor, it is essential that the oxidation reaction is carried to completion so that all these

intermediates are converted to sulphates.

Exiting the digester 179 is a stream 183 which enters a solid/liquid separator 185. In the solid/liquid separator 185 the solids, composed of molybdenum disulphide, coke and ash, are filtered from the cobalt amine solution in the first stage of solids separation. Exiting the separator 185 is a solids stream 189 and a liquid stream 187. The solids stream 189 enters an oxidizer 191 where a concentrated sulphuric acid stream 193 is added to convert the molybdenum disulphide to molybdenum oxides. Exiting the oxidizer 191 is a stream 195 which enters a digester 197. A stream of dilute ammonia 199 is added to the digester to yield a complex of molybdenum and ammonia, thereby facilitating later precipitation of metal values in the first zone of the reactor 159.

Ammonium sulphate is also added to the digester via stream 201. This stream 201 originates from separator 205, which separates ammonium sulphate from liquid hydrocarbons as both are charged thereto as effluent from the clarifier 167 via overflow stream 203.

The discharge stream 209 from the digester 197 contains ash and coke suspended in the ammoniacal molybdenum solution which is passed into a second solid/liquid separator 211 to remove the solid coke and ash discharged in stream 213. The ammoniacal molybdenum solution from separator 211 forms a stream 215 which is combined with stream 187 from the first separator 185 and enters mixer 155. The resulting ammoniacal solution of cobalt and molybdenum complexes is then slurried with pulverized coal in the mixer 155. The slurry is then preheated and passed by stream 157 into reactor 159 for another cycle of the reaction.

It is apparent that the gaseous reduction is useful for preparing fresh catalysts, supported or unsupported, from native ores, scrap or spent catalysts

for use in fluidized or packed beds in conventional processing plants.

In particular this invention provides a continuous process for producing catalysts for converting pollutants in automobile exhaust gases, especially ruthenium, rhodium, palladium and platinum catalysts and mixtures thereof by providing a solution of a compound of the metal catalyst and introducing hydrogen into the solution so as to precipitate the metal and continuous repeating of this procedure.

Also the process can be used to provide a catalyst mixture of at least two, generally synergistically active, especially cobalt and molybdenum, metals, one of which is typically in the form of a compound by forming a process for preparing a catalyst mixture comprising at least two catalytically active metals which comprises: forming a metal salt solution of the first catalytically active metal and forming a metal salt solution of the second catalytically active metal; concurrently introducing said solutions into a precipitation zone; introducing gaseous hydrogen into said precipitation zone to precipitate a mixture of the first and second catalytically active metals in a catalytically active state; and continuously repeating the above steps. Typically the solution resulting from the precipitation is removed and separated to form a first metal leach solution for use in forming the metal salt solution of the first metal and a second metal leach solution for use for the second metal salt solution. Naturally, the catalyst mixture is to be used for catalysing the conversion of a carbonaceous material as described above; in particular a carbonaceous material capable of being converted into a hydrocarbon fuel can be introduced into the precipitation zone.

CLAIMS

1. A process for the continuous reactivation of a metal catalyst used in the catalytic conversion of a carbonaceous material, the metal of said catalyst being copper, nickel, cobalt, silver, gold, platinum, palladium, rhodium, molybdenum, tungsten, ruthenium or vanadium or a mixture thereof, the process comprising:

reacting at least a portion of said used catalyst with a liquid reactive with said catalyst to form a metal salt solution;

introducing gaseous hydrogen into said metal salt solution such that active catalyst is precipitated therefrom;

introducing said precipitated catalyst into the catalytic conversion reaction; and

repeating the above steps such that at least a portion of said used catalyst in the catalytic conversion is continuously replaced by said precipitated metal.

2. A process according to claim 1 characterised in that said liquid comprises an acid or ammonium hydroxide.

3. A process according to claim 1 or 2, characterised in that said carbonaceous material comprises a cellulosic material or a hydrocarbon.

4. A process according to any one of the preceding claims, characterised in that the precipitation is carried out within a tubular reactor and said liquid is charged to said tubular reactor under steady-state conditions in modified plug flow in which localized, limited backmixing occurs.

5. A process according to claim 4, characterised in that said solution is heated while within said tubular reactor to a temperature of at least about 100°C.

6. A process according to any one of the preceding claims, characterised in that the precipitation takes place adjacently the catalytic conversion reaction within a single tubular reactor.

7. A process according to any one of claims 4 to 6 characterised in that said tubular reactor is heated such that the catalytic conversion takes place at a higher temperature than the precipitation.

8. A process according to any one of the preceding claims, characterised in that said converted carbonaceous material comprises catalyst contaminant, which contaminant combines with said metal catalyst in the catalytic conversion reaction to reduce the catalytic activity of said metal catalyst and wherein after the hydrogen has been introduced, a portion of said contaminant is removed by removing a portion of the solution.

9. A process according to any one of the preceding claims characterised in that the metal catalyst is a substrate supported metal catalyst such that upon reaction with the solution, a metal salt solution and a leached solid substrate material is formed and upon introducing hydrogen into a mixture of said metal salt solution and leached solid substrate material, said metal is deposited on said solid substrate material.

10. A process for preparing a catalyst mixture comprising at least two catalytically active metals which comprises: forming a metal salt solution of the first catalytically active metal and forming a metal salt solution of the second catalytically active metal; concurrently introducing said solutions into a precipitation zone; introducing gaseous hydrogen into said precipitation zone to precipitate a mixture of the first and second catalytically active metals in a catalytically active state; and continuously repeating the above steps.

11. A process according to claim 10 characterised by comprising removing from the precipitation zone the solution resulting from said precipitation and separating said solution to form a first metal leach solution for use in forming the metal salt solution of the first metal and a second metal leach solution for use in forming the metal salt solution of the second metal.

12. A process according to claim 10 or 11 characterised by comprising introducing a carbonaceous material into a catalytic conversion zone and introducing therein said mixture of catalytically active metals so as to catalyse the conversion of the carbonaceous material with hydrogen.

13. A process according to claim 12 characterised in that said precipitation zone and said catalytic conversion zone are contiguous zones in a single tubular reactor.

14. A process according to claim 11 characterised by further comprising introducing into said precipitation zone a carbonaceous material capable of being converted to a hydrocarbon fuel in the presence of the catalyst mixture.

15. A process according to any one of claims 10 to 14 characterised in that the catalytically active metals are cobalt and molybdenum.

16. A process according to any one of claims 10 to 15 characterised in that at least one of said catalytically active metals is in the form of a metal compound.

17. A process according to any one of claims 10 to 15 which has one or more of the features of claims 2 to 9.

1/5

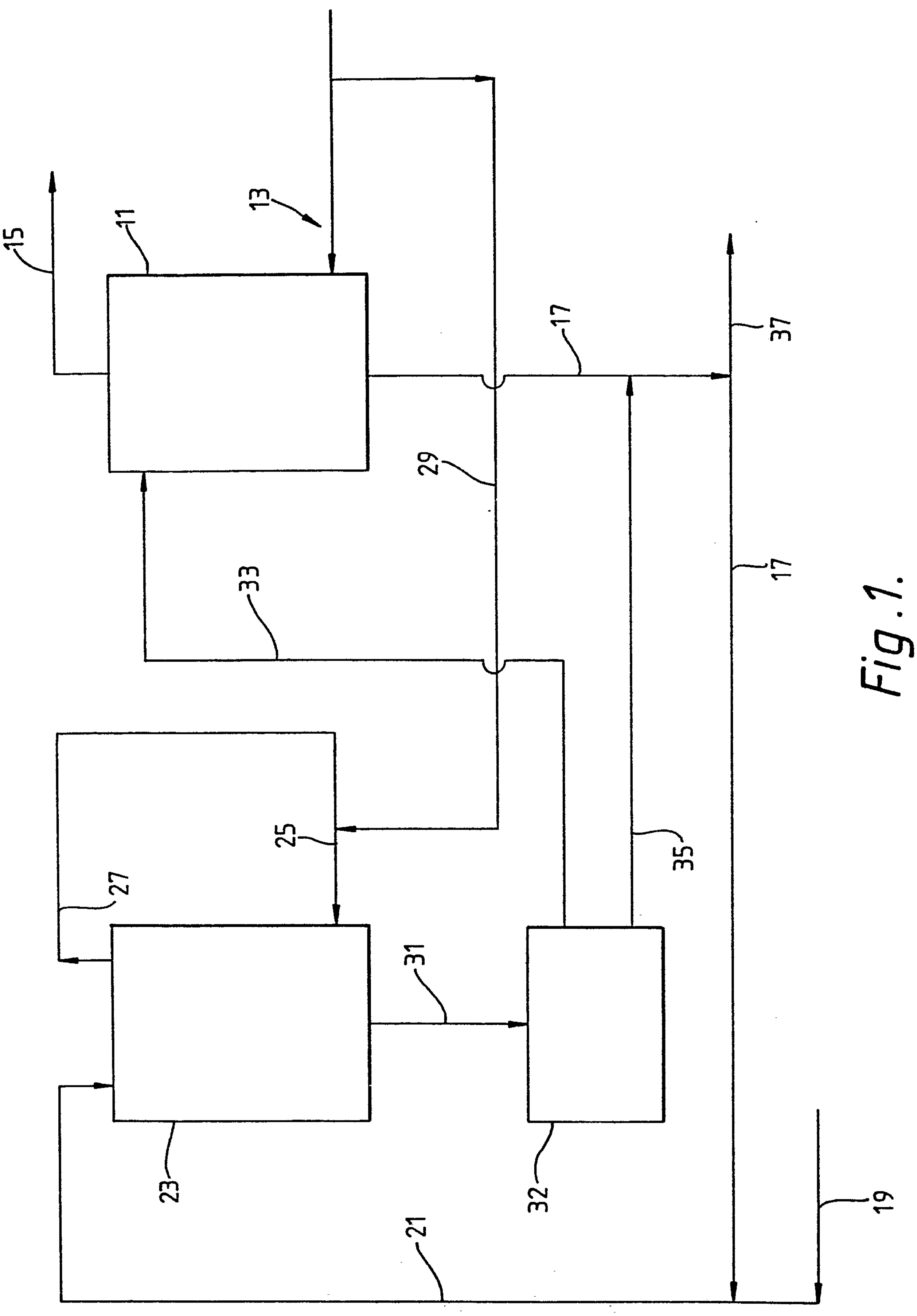


Fig. 1.

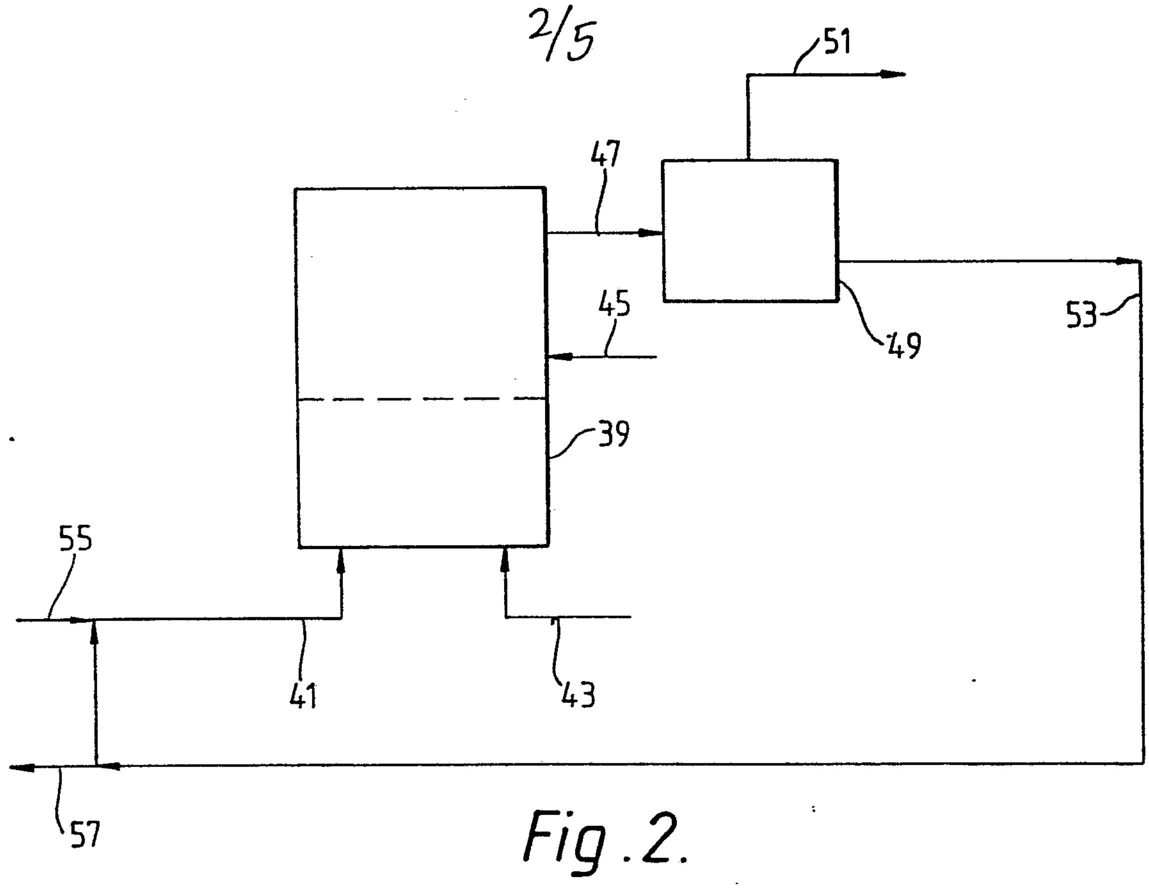


Fig. 2.

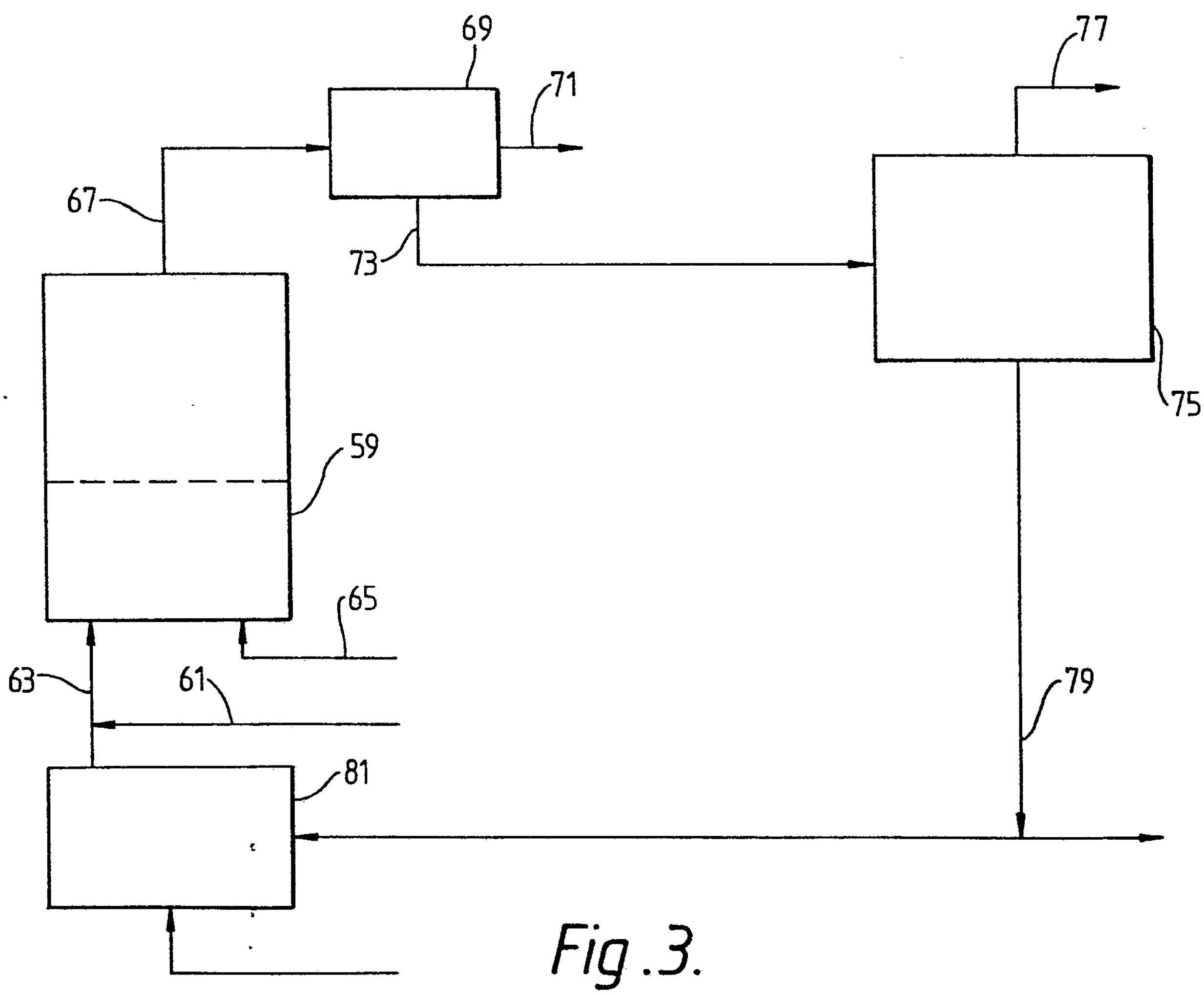


Fig. 3.

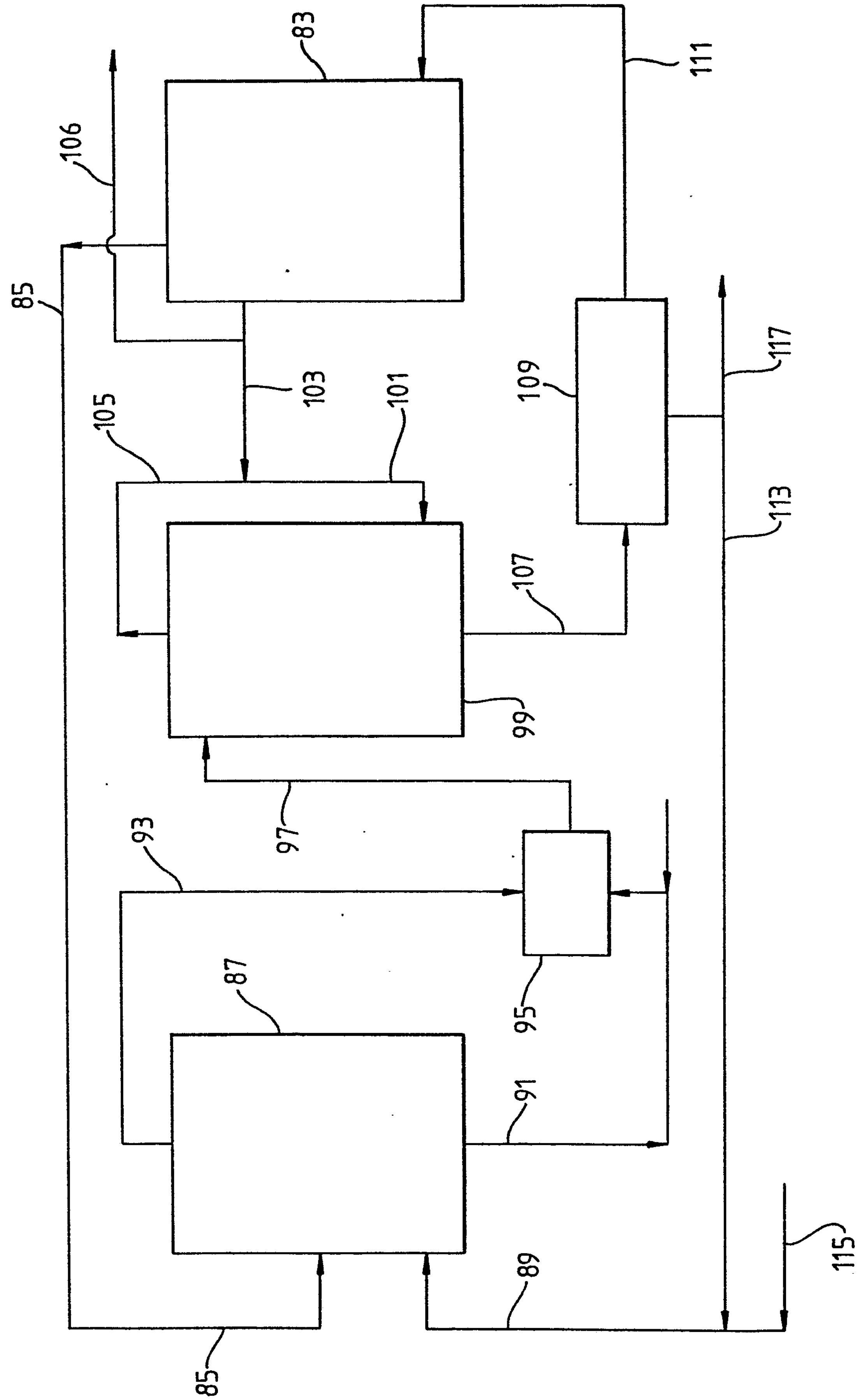
83
106
111
85
103
101
105
109
117
113
107
99
97
93
95
87
91
89
115
85

Fig. 4.

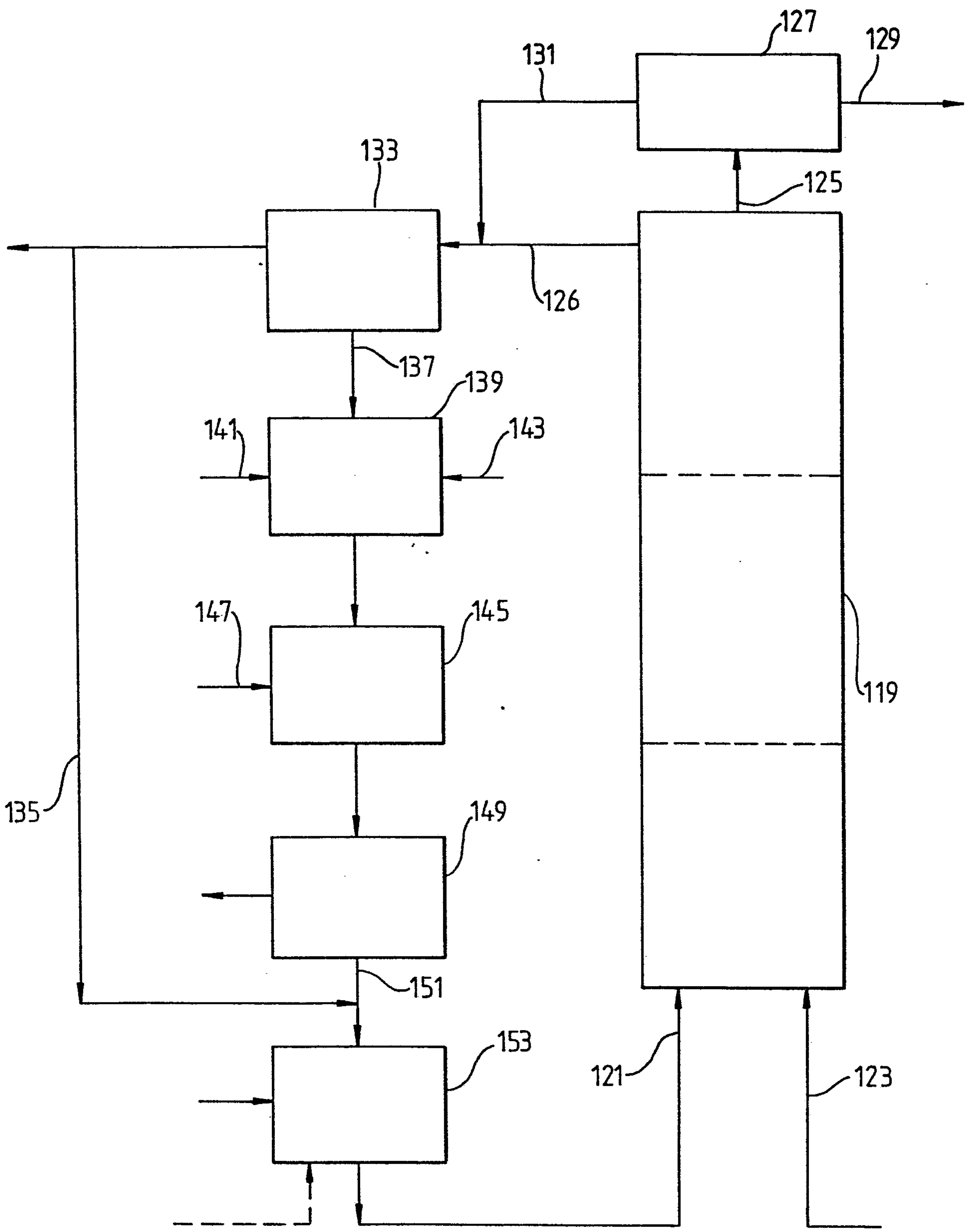
127
129
131
133
125
126
137
139
141
143
147
145
119
135
149
151
153
121
123

Fig.5.

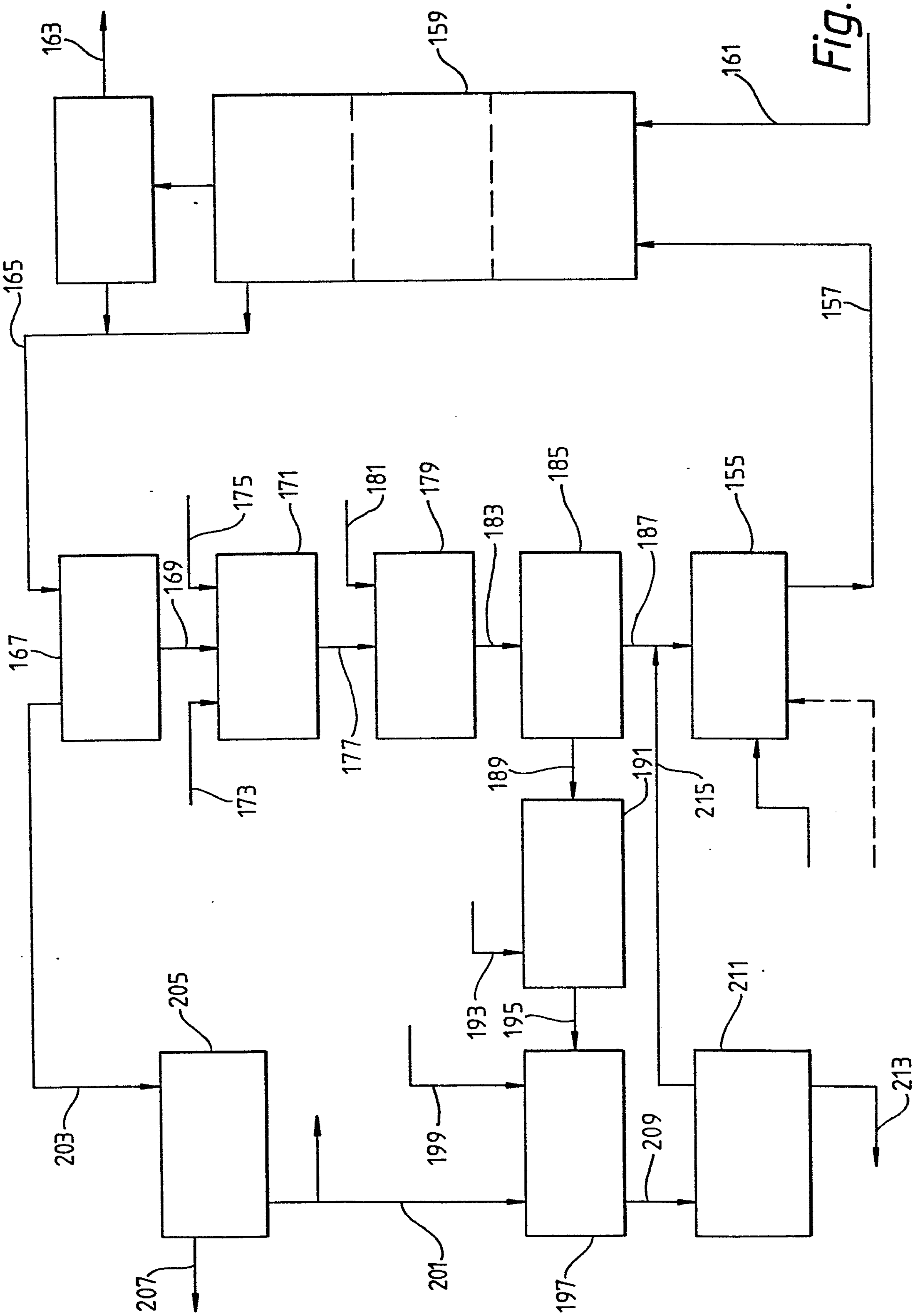

155
157
159
161
163
165
167
169
171
173
175
177
179
181
183
185
187
189
191
193
195
197
199
201
203
205
207
209
211
213
215


Fig.6.